Europäisches Patentamt

European Patent Office

Office européen des brevets

(11) Veröffentlichungsnummer : **0 158 782**
**B1**

(12) **EUROPÄISCHE PATENTSCHRIFT**

(45) Veröffentlichungstag der Patentschrift :
13.12.89

(21) Anmeldenummer : 85101332.6

(22) Anmeldetag : 08.02.85

(51) Int. Cl.⁴ : **C 09 K 11/67**, C 09 K 11/54,
C 09 K 11/59, C 09 K 11/55,
C 09 K 11/64, C 09 K 11/66

(54) Leuchtstoffe auf der Basis von mit Mangan aktiviertem Zinksilikat und Verfahren zu ihrer Herstellung (II).

(30) Priorität : 14.04.84 DE 3414124

(43) Veröffentlichungstag der Anmeldung :
23.10.85 Patentblatt 85/43

(45) Bekanntmachung des Hinweises auf die Patenterteilung : 13.12.89 Patentblatt 89/50

(84) Benannte Vertragsstaaten :
AT BE CH DE FR GB IT LI NL SE

(56) Entgegenhaltungen :
EP—A— 0 015 382
GB—A— 642 966
GB—A— 1 111 163
US—A— 3 208 950
US—A— 3 586 635
Die Akte enthält technische Angaben, die nach dem Eingang der Anmeldung eingereicht wurden und die nicht in dieser Patentschrift enthalten sind.

(73) Patentinhaber : Degussa Aktiengesellschaft
Weissfrauenstrasse 9
D-6000 Frankfurt am Main 1 (DE)

(72) Erfinder : Kiss, Akos, Dr. Dipl.-Chem.
Keplerstrasse 69
D-8750 Aschaffenburg (DE)
Erfinder : Kleinschmit, Peter, Dr. Dipl.-Chem.
Wildaustrasse 19
D-6450 Hanau (DE)
Erfinder : Völker, Werner, Dr. Dipl.-Chem.
Auf dem Niederberg 45
D-6368 Bad Vilbel (DE)
Erfinder : Halbritter, Günter, Dipl.-Ing.
Lindenstrasse 10
D-6458 Rodenbach 1 (DE)

**Beschreibung**

Die Erfindung betrifft Leuchtstoffe auf der Basis von mit Mangan aktiviertem Zinksilikat (Zn$_2$SiO$_4$ : Mn), sowie ein Verfahren zu deren Herstellung.

Leuchtstoffe sind feste Substanzen, die befähigt sind, nach Energieabsorption (z. B. Tageslicht, Ultraviolett-, Röntgen- oder Korpuskularstrahlen) Licht auszusenden, das im allgemeinen eine größere Wellenlänge aufweist als sie die absorbierte Strahlung besitzt. Die Lichtausstrahlung findet während der Erregung selbst statt und in verschieden langen Zeiträumen danach, die von Millisekunden bis Stunden reichen können.

Leuchtstoffe finden verbreitet Anwendung, wie beispielsweise in der Beleuchtungstechnik zur Erhöhung oder Energieausbeute bei Quecksilberlampen, in der Röntgendiagnostik oder bei der Beschichtung von Fernsehröhren zur Sichtbarmachung des modulierten Elektronenstrahls. Außerdem werden sie als Überzüge für keramische Produkte verwendet, insbesondere in Glasuren für keramische Fliesen.

Leuchtfähig sind nur wenige anorganische Verbindungen. Im allgemeinen wird die Leuchtfähigkeit erst durch eine Aktivierung erworben, zum Beispiel durch Einbau kleiner Mengen an kristallgitterfremden Ionen (Aktivatoren) in das Kristallgitter (Wirtsgitter) der anorganischen Verbindung (Grundmaterial). Bei den aktivatorhaltigen Leuchtstoffen handelt es sich daher um kristallisierte Verbindungen, in denen einige Kationen des Grundmaterials durch fremde Kationen ersetzt sind. Die eingebauten Kationen mit der sie umgebenden Schar von Anionen hat man dabei als sogenannte Leuchtzentren aufzufassen, die für die charakteristischen Absorptionen und Emissionen verantwortlich sind.

Von Bedeutung als Grundmaterial für die Leuchtstoffe sind vor allem Salze der Erdalkalien und ihrer Nebengruppenelemente Zink und Kadmium, wie Phosphate, Silikate, Borate, Aluminate und Oxide. Als Aktivatoren benutzt man vorzugsweise die Seltenen Erden und Schwermetalle, wie Mangan, Blei, Zinn oder Antimon.

Die Leuchtstoffe müssen im allgemeinen sehr rein sein und ein möglichst störstellenfreies Kristallgitter besitzen, da Verunreinigungen in den Ausgangsmaterialien als Löschzentren wirken und die Leuchtintensität der Leuchtstoffe herabsetzen. Ähnlich wirken Gitterdefekte. Beim mechanischen Zerkleinern der Verbindungen wird die Leuchtfähigkeit beeinträchtigt und kann im Extremfall völlig zerstört werden.

Die bisher bekannten Leuchtstoffe haben den weiteren Nachteil, daß sie zum großen Teil nicht temperaturstabil sind und sich in vielen Glasfritten auflösen. Sie sind daher als Farbkörper in Glasuren für keramische Fliesen nicht geeignet, die Brenntemperaturen von über 700 bis 800 °C erfordern.

Mit Mangan aktiviertes Zinkorthosilikat (Zn$_2$SiO$_4$ : Mn), das in der Natur als Willemit vorkommt, ist ein bekannter Leuchtstoff, der bei Anregung mit kurzwelligem Ultraviolett (254 μm) im grünen Bereich emittiert. Zur synthetischen Herstellung dieses Leuchtstoffes müssen reine Ausgangsverbindungen in Form von Zinkoxid. Siliziumoxid und Mangankarbonat eingesetzt werden, was das Endprodukt erheblich verteuert.

Aus der EP-A-15 382 sind Leuchtstoffe auf der Basis von mit Mangan dotiertem Zinksilikat (Zn$_2$SiO$_4$ : Mn) bekannt, bei denen ein Teil des Siliziums durch Ionenpaare aus den Gruppen III A und V A des Periodischen Systems der Elemente substituiert ist. Diese Leuchtstoffe müssen aus hochreinen Komponenten durch Glühen hergestellt werden, wobei das Endprodukt mahlempfindlich und nicht beständig gegen die Mehrzahl der üblichen Glasuren ist.

In der US-A-3 208 950 wird ein Verfahren zur Herstellung von Leuchtstoffen auf der Basis von mangandotiertem Zinksilikat beschrieben, ausgehend von Siliziumdioxid, Zinkoxid und Mangankarbonat. Auch die GB-PS 111 163 offenbart ein Verfahren zur Herstellung von Leuchtstoffen, wobei in beiden Fällen bei 1 250 bzw. 1 200 °C geglüht wird. Über die Reinheit der Ausgangsprodukte und über die Beständigkeit gegenüber Glasschmelzen werden keine Aussagen gemacht.

Es war daher Aufgabe der vorliegenden Erfindung, Leuchtstoffe auf der Basis von mit Mangan aktiviertem Zinksilikat (Zn$_2$SiO$_4$ : Mn) zu entwickeln, die bei praktisch gleicher Leuchtintensität aus handelsüblichen Ausgangskomponenten mit geringerem Reinheitsgrad hergestellt werden können, die nicht mahlempfindlich, temperaturstabil und chemisch stabiler gegen keramische Glasuren sind als die bekannten Leuchtstoffe. Außerdem sollte ein Verfahren zur Herstellung dieser Leuchtstoffe gefunden werden.

Diese Aufgabe wurde erfindungsgemäß dadurch gelöst, daß sie neben

1,5 bis 94,8 Mol% Zinkoxid (ZnO)

1 bis 90 Mol% Siliziumoxid (SiO$_2$)

und

0,2 bis 1,3 Mol% Manganoxid (MnO) noch

0,1 bis 25 Mol% Alkalioxide und/oder Erdalkalioxide und/oder Titanoxid (TiO$_2$) und/oder Zirkonium- oxid (ZrO$_2$) und/oder Chromoxid (Cr$_2$O$_3$) und/oder Bleioxid (PbO) und

0,1 bis 23,8 Mol% Natriumoxid (Na$_2$O)

2

1,3 bis 24 Mol% Aluminiumoxid (Al$_2$O$_3$) und
2,5 bis 48 Mol% Siliziumoxid (SiO$_2$)
in Form einer Zeolithphase enthalten.

Vorzugsweise enthalten die Leuchtstoffe neben
10 · bis 60 Mol% Zinkoxid (ZnO)
10 bis 60 Mol% Siliziumoxid (SiO$_2$)
und
0,3 bis 1,0 Mol% Manganoxid (MnO)
noch
5 bis 15 Mol% Alkalioxide und/oder Erdalkalioxide und/oder Titanoxid (TiO$_2$) und/oder Zirkoniumoxid (ZrO$_2$) und/oder Chromoxid (Cr$_2$O$_3$) und/oder Bleioxid (PbO)
und
0,5 bis 19,7 Mol% Natriumoxid (Na$_2$O)
1,5 bis 20 Mol% Aluminiumoxid (Al$_2$O$_3$)
und
3 bis 40 Mol% Siliziumoxid
in Form einer Zeolithphase.

Diese Leuchtstoffe lassen sich aus handelsüblichen Ausgangskomponenten in nichthochreiner Qualität herstellen, sind weitgehend mahlunempfindlich und widerstandsfähig gegen die meisten keramischen Glasuren. Sie besitzen ein Anregungsmaximum bei 230 nm und ein Emissionsmaximum bei 532 nm (Δλ = ± 2 nm) im grünen Bereich mit einer Halbwertsbreite von rund 20 nm.

Besonders unempfindlich und intensive Leuchtstoffe erhält man im folgenden Bereich :

34 bis 44 Mol% Zinkoxid (ZnO)
10 bis 20 Mol% Siliziumoxid (SiO$_2$)
0,4 bis 0,8 Mol% Manganoxid (MnO)
6 bis 10 Mol% Oxide (Alkali, Erdalkali, TiO$_2$, ZrO$_2$, Cr$_2$O$_3$, PbO)
9,2 bis 12,6 Mol% Natriumoxid (Na$_2$O)
10 bis 13 Mol% Aluminiumoxid (Al$_2$O$_3$)
20 bis 26 Mol% Siliziumoxid (SiO$_2$)

wobei die letzteren Bestandteile Na$_2$O, Al$_2$O$_3$ und SiO$_2$ in Form einer Zeolithphase vorliegen.

Vorzugsweise verwendet man als Oxid ein Erdalkalioxid, insbesondere Magnesiumoxid. Der Einsatz von Zeolith, vorteilhafterweise vom Typ A, hat den weiteren Vorteil, daß der Aktivator Mangan mit Hilfe des Zeoliths als Ionenaustauscher dem Produkt zugeführt und dadurch sehr gleichmäßig im Leuchtstoff verteilt werden kann. Im Röngtendiagramm dieser Leuchtstoffe sind neben den Reflexen des Zinkorthosilikats und gegebenenfalls des Zinkoxids und der Kieselsäure auch Reflexe der Zeolithphase vorhanden.

Zur Herstellung der erfindungsgemäßen Leuchtstoffe werden handelsübliche Ausgangsprodukte in Oxidform oder in Form von Verbindungen, die beim Erhitzen in ein Oxid übergehen, wie beispielsweise Zinkoxid oder Zinkkarbonat, Kieselsäure, Magnesit und manganbeladener Zeolith, zerkleinert und gut gemischt, dann leicht gepresst und in einer Festkörperreaktion bei 850 bis 1 400 °C während 0,5 bis 6 Stunden an der Luft geglüht. Anschließend kann das Glühprodukt durch Mahlen zerkleinert werden.

Vorzugsweise wird bei 1 000 bis 1 100 °C während 1 bis 3 Stunden geglüht.

Zur Herstellung des mangabeladenen Zeoliths werden beispielsweise 200 g Zeolith (HAB 40-Degussa) mit 5,9 g Manganchlorid (MnCl$_2$ · 2H$_2$O) in 1 l Wasser bei 80 °C etwa 4 Stunden gerührt, abfiltriert, gewaschen und bei 120 °C getrocknet.

Beispielsweise werden 432 g Zinkoxid, 93 g Kieselsäure, 50 g Magnesit und 425 g manganbeladener Zeolith (von Typ A) zerkleinert und trocken während 15 Minuten in einem Mischer gemischt. Anschließend wird das Gemenge in einem Keramiktiegel durch Eindrücken verdichtet und in einen Kammerofen gegeben, der mit 200 °C pro Stunde aufgeheizt wird. Man kann aus dem Gemisch aber auch Preßlinge herstellen und diese glühen. Das Glühen erfolgt bei 1 050 °C im Zeitraum von 90 Minuten. Der so hergestellte Leuchtstoff ist temperaturstabil und verliert beim Zerkleinern nicht wahrnehmbar an Leuchtkraft. Außerdem ist er widerstandsfähig gegen die meisten keramischen Glasuren.

Folgende Leuchtstoffe wurden nach diesem Verfahren erzeugt :

| ZnO [Mol%] | SiO$_2$ [Mol%] | MnO [Mol%] | Na$_2$O [Mol%] | Al$_2$O$_3$ [Mol%] | Me$_x$O$_y$ [Mol%] |
|---|---|---|---|---|---|
| 38,7 | 25,5 | 0,9 | 13,0 | 13,9 | 8,0 MgO |
| 38,7 | 32,5 | 0,5 | 9,9 | 10,4 | 8,0 MgO |
| 1,6 | 91,5 | 0,7 | 2,5 | 3,2 | 0,5 CaO |

EP 0 158 782 B1

Tabelle   (Fortsetzung)

| ZnO Mol% | SiO$_2$ Mol% | MnO Mol% | Na$_2$O Mol% | Al$_2$O$_3$ Mol% | Me$_x$O$_y$ Mol% |
|---|---|---|---|---|---|
| 1,9 | 68,6 | 1,1 | 12,9 | 14,0 | 1,5 TiO$_2$ |
| 20,8 | 62,1 | 0,4 | 1,6 | 2,0 | 13,1 MgO |
| 5,3 | 50,2 | 1,3 | 20,9 | 22,2 | 0,1 Cr$_2$O$_3$ |
| 22,2 | 43,8 | 0,8 | 10,0 | 10,8 | 12,4 CaO |
| 22,6 | 34,8 | 0,7 | 11,5 | 12,2 | 18,2 MgO |
| 23,2 | 28,3 | 0,3 | 12,9 | 13,2 | 22,1 MgO |
| 69,8 | 17,4 | 0,5 | 5,7 | 6,2 | 0,4 ZrO$_2$ |
| 90,1 | 5,4 | 0,6 | 1,6 | 2,2 | 0,1 PbO |

**Patentansprüche**

1. Leuchtstoffe auf der Basis von mit Mangan aktiviertem Zinksilikat (Zn$_2$SiO$_4$ : Mn), dadurch gekennzeichnet, daß sie neben

1,5 bis 94,8 Mol% Zinkoxid (ZnO)
1 bis 90 Mol% Siliziumoxid (SiO$_2$)
und
0,2 bis 1,3 Mol% Manganoxid (MnO)
noch
0,1 bis 25 Mol% Alkalioxide und/oder Erdalkalioxide und/oder Titanoxid (TiO$_2$) und/oder Zirkonium-oxid (ZrO$_2$) und/oder Chromoxid (Cr$_2$O$_3$) und/oder Bleioxid (PbO)
und
0,1 bis 23,8 Mol% Natriumoxid (Na$_2$O)
1,3 bis 24 Mol% Aluminiumoxid (Al$_2$O$_3$) und
2,5 bis 48 Mol% Siliziumoxid (SiO$_2$)
in Form einer Zeolithphase enthalten.

2. Leuchtstoffe nach Anspruch 1, dadurch gekennzeichnet, daß sie neben

10 bis 60 Mol% Zinkoxid (ZnO)
10 bis 60 Mol% Siliziumoxid (SiO$_2$)
und
0,3 bis 1,0 Mol% Manganoxid (MnO)
noch
5 bis 15 Mol% Alkalioxide und/oder Erdalkalioxide und/oder Titanoxid und/oder Zirkoniumoxid und/oder Chromoxid und/oder Bleioxid
und
0,5 bis 19,7 Mol% Natriumoxid (Na$_2$O)
1,5 bis 20 Mol% Aluminiumoxid (Al$_2$O$_3$) und
3 bis 40 Mol% Siliziumoxid (SiO$_2$)

in Form einer Zeolithphase enthalten.

3. Leuchtstoffe nach Anspruch 1 und 2, dadurch gekennzeichnet, daß sie

34 bis 44 Mol% Zinkoxid (ZnO)
10 bis 20 Mol% Siliziumoxid (SiO$_2$)
0,4 bis 0,8 Mol% Manganoxid (MnO)
6 bis 10 Mol% Oxide (Alkali, Erdalkali, TiO$_2$, ZrO$_2$, Cr$_2$O$_3$, PbO)
9,2 bis 12,6 Mol% Natriumoxid (Na$_2$O)
10 bis 13 Mol% Aluminiumoxid (Al$_2$O$_3$)
20 bis 26 Mol% Siliziumoxid (SiO$_2$)
enthalten, wobei die letzteren Bestandteile Na$_2$O, Al$_2$O$_3$ und SiO$_2$ in Form einer Zeolithphase vorliegen.

4. Verfahren zur Herstellung von Leuchtstoffen nach Anspruch 1 bis 3, dadurch gekennzeichnet, daß die Ausgangskomponenten in Oxidform oder in Form einer Verbindung, die beim Erhitzen in ein Oxid

4

übergeht, in den entsprechenden Molverhältnissen mit einem manganbeladenen Zeolithen gemischt und zerkleinert, dann leicht gepresst und in einer Festkörperreaktion bei 850 bis 1 400 °C während 0,5 bis 6 Stunden an der Luft geglüht werden.

5. Verfahren zur Herstellung von Leuchtstoffen nach Anspruch 4, dadurch gekennzeichnet, daß bei 1 000 bis 1 100°C während 1 bis 3 Stunden geglüht wird.


## Claims

1. Luminescent zinc silicate materials activated with manganese ($Zn_2SiO_4$ : Mn), characterised in that they comprise in addition to

1.5 to 94.8 molar % zinc oxide (ZnO)
1 to 90 molar % silica ($SiO_2$)

and

0.2 to 1.3 molar % manganese oxide (MnO) also

0.1 to 25 molar % alkali oxides and/or alkaline earth oxides and/or titanium dioxide ($TiO_2$) and/or zirconium dioxide ($ZrO_2$) and/or chromium dioxide ($Cr_2O_3$) and/or lead oxide (PbO) and

0.1 to 23.8 molar % sodium oxide ($Na_2O$)
1.3 to 24 molar % aluminium oxide ($Al_2O_3$)

and

2.5 to 48 molar % silica ($SiO_2$)

in the form of a zeolite phase.

2. Luminescent materials according to claim 1, characterised in that they comprise in addition to

10 to 60 molar % zinc oxide (ZnO)
10 to 60 molar % silica ($SiO_2$)

and

0.3 to 1.0 molar % manganese oxide (MnO) also

5 to 15 molar % alkali oxides and/or alkaline earth oxides and/or titanium dioxide and/or zirconium dioxide and/or chromium dioxide and/or lead oxide (PbO) and

0.5 to 19.7 molar % sodium oxide ($Na_2O$)
1.5 to 20 molar % aluminium oxide ($Al_2O_3$)

and

3 to 40 molar % silica ($SiO_2$)

in the form of a zeolite phase.

3. Luminescent materials according to claims 1 and 2, characterised in that they comprise

34 to 44 molar % zinc oxide (ZnO)
10 to 20 molar % silica ($SiO_2$)
0.4 to 0.8 molar % manganese oxide (MnO)
6 to 10 molar % oxides (alkali, alkaline earth, $TiO_2$, $ZrO_2$, $Cr_2O_3$, PbO)
9.2 to 12.6 molar % sodium oxide ($Na_2O$)
10 to 13 molar % aluminium oxide ($Al_2O_3$)
20 to 26 molar % silica ($SiO_2$)

where the last constituents $Na_2O$, $Al_2O_3$ and $SiO_2$ are in the form of a zeolite phase.

4. Process for the manufacture of luminescent materials according to claims 1 to 3 characterised in that the starting components in oxide form or in the form of compounds that are transformed into oxides upon heating are mixed in the appropriate molar ratios with a manganese-loaded zeolite and are comminuted, and are then lightly pressed and calcinated in air in a solid-state reaction for 0.5 to 6 hours at 850 to 1 400 °C.

5. Process for the manufacture of luminescent materials according to claim 4, characterised in that calcination is effected for 1 to 3 hours at 1 000 to 1 100 °C.


## Revendications

1. Substances luminescentes à base de silicate de zinc activé au manganèse ($Zn_2SiO_4$ : Mn) caractérisées en ce qu'en plus de

1,5 à 94,8 % en mole d'oxyde de zinc (ZnO)
1 à 90 % en mode d'oxyde de silicium ($SiO_2$)

et

0,2 à 1,3 % en mole d'oxyde de manganèse (MnO), elles contiennent encore de

0,1 à 25 % en mole d'oxydes de métaux alcalins et/ou d'oxydes de métaux alcalino-terreux et/ou d'oxyde de titane (TiO$_2$) et/ou d'oxyde de zirconium (ZrO$_2$) et/ou d'oxyde de chrome (Cr$_2$O$_3$) et/ou d'oxyde de plomb (PbO)
et de

0,1 à 23,8 % en mole d'oxyde de sodium (Na$_2$O)
1,3 à 24 % en mole d'oxyde d'aluminium (Al$_2$O$_3$)
et de

2,5 à 48 % en mole d'oxyde de silicium (SiO$_2$)
sous forme d'une phase de zéolitique.

2. Substances luminescentes selon la revendication 1, caractérisées en ce qu'en plus de
10 à 60 % en mole d'oxyde de zinc (ZnO)
10 à 60 % en mole d'oxyde de silicium (SiO$_2$)
et de

0,3 à 1,0 % en mole d'oxyde de manganèse (MnO),
elles contiennent encore de
5 à 15 % en mole d'oxydes de métaux alcalin et/ou d'oxydes de métaux alcalino-terreux et/ou d'oxyde de titane (TiO$_2$) et/ou d'oxyde de zirconium (ZrO$_2$) et/ou d'oxyde de chrome (Cr$_2$O$_3$) et/ou d'oxyde de plomb (PbO)
et de

0,5 à 19,7 % en mole d'oxyde de sodium (Na$_2$O)
1,5 à 20 % en mole d'oxyde d'aluminium (Al$_2$O$_3$)
et de

3 à 40 % en mole d'oxyde de silicium
sous forme de phase zéolitique.

3. Substances luminescentes selon la revendication 1 ou 2, caractérisées en ce qu'elles contiennent de
34 à 44 % en mole d'oxyde de zinc (ZnO)
10 à 20 % en mole d'oxyde de silicium (SiO$_2$)
0,4 à 0,8 % en mole d'oxyde de manganèse (MnO)
6 à 10 % en mole d'oxydes (de métal alcalin, métal alcalino-terreux, TiO$_2$, ZrO$_2$, Cr$_2$O$_3$, PbO.
de

9,2 à 12,6 % en mole d'oxyde de sodium (Na$_2$O)
10 à 13 % en mole d'oxyde d'aluminium (Al$_2$O$_3$)
20 à 26 % en mole d'oxyde de silicium (SiO$_2$),
les composants Na$_2$O, Al$_2$O$_3$ et SiO$_2$ cités en dernier se trouvant sous forme d'une phase zéolitique.

4. Procédé pour la préparation de substances luminescentes selon l'une quelconque des revendications 1 à 3, caractérisé en ce que l'on mélange avec une zéolite chargée de manganèse, en les proportions molaires appropriées, les composants de départ sous forme d'oxydes ou sous forme d'un composé qui se transforme en un oxyde lors du chauffage, et on fragmente ce mélange, puis on le comprime légèrement et on le cuit à l'air, dans une réaction en phase solide, à 850-1 400 °C, pendant 0,5 à 6 heures.

5. Procédé pour la préparation de substances luminescentes selon la revendication 4, caractérisé en ce que l'on effectue la cuisson pendant 1 à 3 heures à 1 000-1 100 °C.